**Europäisches Patentamt**

**European Patent Office**

**Office européen des brevets**

(19)

(11) Veröffentlichungsnummer: **0 365 799**
**A2**

# (12) EUROPÄISCHE PATENTANMELDUNG

(21) Anmeldenummer: 89116410.5

(22) Anmeldetag: 06.09.89

(51) Int. Cl.⁵: **G01M 9/00**

(30) Priorität: 26.10.88 DE 3836376

(43) Veröffentlichungstag der Anmeldung:
02.05.90 Patentblatt 90/18

(84) Benannte Vertragsstaaten:
**FR GB IT SE**

(71) Anmelder: **DEUTSCHE FORSCHUNGSANSTALT FÜR LUFT- UND RAUMFAHRT e.V.**

**D-5300 Bonn(DE)**

(72) Erfinder: **Amecke, Jochen, Dr. Ing.**
**Kalklage 1 a**
**D-3400 Göttingen(DE)**
Erfinder: **Heddergott, Alfred, Dipl.-Ing.**
**Sonnenwinkel 21**
**D-3403 Friedland(DE)**
Erfinder: **Wedemeyer, Erich, Dr.rer.nat.**
**Am Weinberg 37**
**D-3412 Angerstein(DE)**

(74) Vertreter: **Rehberg, Elmar, Dipl.-Ing.**
**Postfach 3162 Am Kirschberge 22**
**D-3400 Göttingen(DE)**

(54) **Verfahren und Vorrichtung zur Strömungsmessung eines grossvolumigen dreidimensionalen Bodenfahrzeugmodells in einem Windkanal.**

(57) Bei der Strömungsmessung eines großvolumigen dreidimensionalen Bodenfahrzeugmodells (2) in einem Windkanal im Niedergeschwindigkeitsbereich bis etwa 100m/sec werden zur Vermeidung oder Reduzierung der durch die Meßstreckenwände (2) hervorgerufenen Windkanalinterferenzen die Wandkontur in geeigneter Weise angepaßt wird. Die Anpassung der Wandkontur erfolgt nur in einer Ebene, und zwar zweidimensional. Die Anpassung wird derart durchgeführt, daß auf einer Linie in Strömungsrichtung die Windkanalinterferenzen vollständig oder nahezu Null werden. Die Vorrichtung zur Durchführung des Verfahrens weist eine das Bodenfahrzeugmodell (2) aufnehmende, Wände (4 - 7) aufweisende Windkanalmeßstrecke (1) auf, bei der durch entsprechende Einstellvorrichtungen die Strahlrandbedingungen veränderbar sind. Die Einstellvorrichtungen (8) sind nur an einer der Wände (4 - 6) der Windkanalmeßstrecke (1) vorgesehen. Die Einstellvorrichtungen (8) sind derart angeordnet und ausgebildet, daß die Anpassung der Strahlrandbedingungen zweidimensional erfolgt.

Fig. 1

## Verfahren und Vorrichtung zur Strömungsmessung eines großvolumigen dreidimensionalen Bodenfahrzeugmodells in einem Windkanal

Die Erfindung geht aus von einem Verfahren zur Strömungsmessung eines großvolumigen dreidimensionalen Bodenfahrzeugmodells in einem Windkanal im Niedergeschwindigkeitsbereich bis etwa 100 m/sec, bei dem zur Vermeidung oder Reduzierung der durch die Meßstreckenwände hervorgerufenen Windkanalinterferenzen die Wandkontur verändert wird. Die Erfindung zeigt gleichzeitig eine Vorrichtung zur Durchführung des Verfahrens mit einer das Bodenfahrzeugmodell aufnehmenden, Wände aufweisenden Windkanalmeßstrecke, bei der durch entsprechende Einstellvorrichtungen die Wandkontur veränderbar ist.

Bei Bodenfahrzeugen, also beispielsweise Personenkraftwagen oder Lastkraftwagen, wird zur Verringerung des Treibstoffbedarfs, der Windgeräusche u. dgl. die Karosserie des Bodenfahrzeugs aerodynamisch günstig ausgebildet. Mit den heute bekannten mathematischen Methoden ist solch eine Ausbildung bzw. Auslegung der Karosserie noch nicht möglich, so daß die Auslegung, zumindest teilweise, auf experimentellem Weg durchgeführt wird. Eine Möglichkeit der experimentellen Auslegung des Bodenfahrzeugs, also beispielsweise der Bestimmung des Druckverlaufs an der Karosserie, besteht darin, das Bodenfahrzeug als ganzes, also in einem Maßstab, in dem das Bodenfahrzeug später auch in Serie hergestellt werden soll, auf der Straße zu vermessen. Dafür ist es erforderlich, das Bodenfahrzeug in einem fahrbereiten Zustand herzustellen. An der Karosserie werden dann entsprechende Meßeinrichtung angeordnet und beim Fahren des Bodenfahrzeugs werden dann die entsprechenden Werte der Meßeinrichtungen aufgenommen. Nachteilig ist, daß die Umströmung des Bodenfahrzeugs abhängig von den jeweiligen Wetterbedingungen, beispielsweise Turbulenzen in der Strömung, Seitenwind usw., ist. Weiterhin ist der Bauaufwand, das Bodenfahrzeug muß im Maßstab 1:1 hergestellt werden, erheblich, wodurch auch die Kosten für die Untersuchungen entsprechend groß sind. Als Alternative dazu ist die Strömungsmessung des Bodenfahrzeugs in einem Windkanal möglich. Das darin zu vermessende Bodenfahrzeug kann dann als Modell, also als Bodenfahrzeugmodell, ausgebildet sein, wobei lediglich die Karosserie der Karosserie des zu untersuchenden Bodenfahrzeugs geometrisch ähnlich sein muß. Dabei kann die Karosserie des zu untersuchenden Bodenfahrzeugmodells durchaus kleiner sein als die des eigentlichen Bodenfahrzeugs. Vorteilhaft bei diesem Verfahren ist, daß, neben der Kosteneinsparung bei der Herstellung des Bodenfahrzeugmodells im Gegensatz zu der Herstellung des gesamten, fahrbereiten Bodenfahrzeugs, genau definierte Strömungsbedingungen vorgegeben werden können. Nachteilig ist jedoch, daß aufgrund der Begrenzung der Strömung im Windkanal, sei es durch Wände oder durch den Rand eines Freistrahls, die Strahlrandbedingungen nicht denen bei ungestörter Strömung entsprechen und dadurch Rückwirkungen auf die Umströmung des Modells vorhanden sind. Diese Rückwirkungen werden als Windkanalinterferenzen bezeichnet.

Zur Vermeidung dieser Windkanalinterferenzen ist aus der US-PS 4 308 748 ein Verfahren und eine Vorrichtung der eingangs beschriebenen Art bekannt. Die dort gezeigte Windkanalmeßstrecke weist allseits geschlossene Windkanalwände auf. Um die Strahlrandbedingungen in dem Windkanal an die in ungestörter Strömung auftretenden anpassen zu können, können drei von den vier Windkanalwänden jeweils dreidimensional verformt werden. Um die Verformbarkeit der Wände zu ermöglichen, sind die Wände in verschiedene Segmente unterteilt, wobei sich jedes einzelne Segment in Strömungsrichtung über die gesamte Windkanalmeßstrecke erstreckt. An den einzelnen Segmenten greifen Einstellvorrichtungen an, die unabhängig voneinander angesteuert werden können, so daß letztendlich die Wände dreidimensional verformbar sind. Zur Berechnung der benötigten Auslenkung, abhängig von dem jeweils zu vermessenden Bodenfahrzeug und den jeweiligen Strömungsverhältnissen, werden an den Windkanalwänden im Bereich der einzelnen Einstellvorrichtungen statische Drücke gemessen. Aus dieser Druckverteilung läßt sich dann mit bekannten Rechenverfahren eine Wandauslenkung bestimmen, bei der die Strömung in der Windkanalmeßstrecke Strahlrandbedingungen aufweist, die nahe denjenigen in ungestörter Strömung sind. Die letztendlich richtigen Auslenkungen der Windkanalwände werden u. U. durch mehrmaliges Wiederholen der Prozedur, also Messen der statischen Wanddrücke und Berechnung der Auslenkungen, erreicht, es ist also ein iteratives Verfahren erforderlich. Nachteilig ist, daß der Aufbau der Windkanalmeßstrecke relativ kompliziert ist. So ist eine Vielzahl von Einstellvorrichtungen erforderlich, die jeweils separat angesteuert werden müssen. Auch die Messung der statischen Wanddrücke bereitet Schwierigkeiten, da aufgrund der zwischen den einzelnen Segmenten gebildeten Stufen sogenannte Eckenströmungen auftreten, die die statischen Drücke beeinflussen, so daß die Gefahr besteht, daß die statischen Wanddrücke falsch gemessen werden und somit auch die notwendige Auslenkung der Windkanalwände falsch berechnet wird. In diesem Fall aber liegen in der Windkanalmeßstrecke nicht diejenigen Strahlrandbedingungen vor, die in ungestörter Strömung vorliegen würden, so daß die an dem Bodenfahrzeugmodell ermittelten Meßwerte nicht auf das Bodenfahrzeug übertragbar sind. Insgesamt hat sich jedoch gezeigt, daß mit Hilfe dieser Windkanalmeßstrecke die Meßergebnisse erheblich verbessert werden können.

Aus der DE-PS 29 41 404 ist eine Meßstrecke für Windkanäle bekannt, bei der die Wandung aus einem Material mit kleinem Elastizitätsmodul und hoher Dehngrenze besteht. Der Querschnitt der Meßstrecke ist rund ausgeführt und an der Wandung greifen eine Vielzahl von Einstellvorrichtungen an. Vorteilhaft bei dieser Meßstrecke ist die Wandung innen durchgehend glatt ausgeführt, so daß dort keine Eckenumströmungen o. dgl. auftreten können. Die Wandung kann mit Hilfe einer Vielzahl von Einstellvorrichtungen beliebig dreidimensional verformt werden, so daß die Strömung in der Windkanalmeßstrecke auch tatsächlich diejenigen Strahlrandbedingungen besitzt, die in ungestörter Strömung auftreten würden. Nachteilig ist auch hier, daß ein großer apparativer Aufbau erforderlich ist. Für die Bestimmung der jeweiligen Wandauslenkung und der Einstellung der Wandauslenkung ist eine gewisse Zeit erforderlich, die in etwa das doppelte der bei herkömmlichen Meßstrecken mit festen Wänden benötigten Zeit beträgt. Dafür treten bei Messungen beliebiger dreidimensionaler Modelle keine Windkanalinterferenzen auf. Aufgrund des komplizierten Aufbaus und der relativ langen Meßzeit ist diese Windkanalmeßstrecke jedoch nur bedingt für Routinebetrieb geeignet.

Aus dem Artikel von U. Ganzer, "Windkanäle mit adaptiven Wänden zur Beseitung von Wandinterferenzen", Zeitschrift für Flugwissenschaften und Weltraumforschung, 3, (1979), Heft 2, Seiten 129 bis 133, ist eine Windkanalmeßstrecke mit zwei adaptiven Windkanalwänden für zweidimensionale Strömungen bzw. Modelle bekannt. Bei dieser Windkanalmeßstrecke werden zwei sich gegenüberliegende Wände, die als geschlossene Wände ausgebildet sind, entsprechend dem zu vermessenden Modell und den gewünschten Strömungsbedingungen ausgelenkt, d. h. adaptiert. Die Berechnung der Auslenkung erfolgt mittels eines iterativen Verfahrens, bei dem als Eingangsgröße Wanddruckmessungen erforderlich sind. Nachteilig ist, daß diese Meßstrecke nur für zweidimensionale Modelle bzw. zweidimensionale Strömungen vorgesehen ist.

Aus dem Artikel "Two-dimensional and three-dimensional adaptation at the T2 transonic windtunnel of Onera/Cert" von J. P. Archambaud und A. Mignosi, (AIAA l5th Aerodynamic Testing Conference, San Diego, California, May 18 - 20, 1988), p. 342 bis 350 ist eine zweidimensionale, adaptive Windkanalmeßstrecke bekannt, bei der die obere und die untere Wand geschlossen und über Einstellvorrichtungen zweidimensional adaptierbar ausgebildet sind. Diese Meßstrecke ist hauptsächlich für zweidimensionale Strömungen und zwar um Flugzeugmodelle vorgesehen. In diesem Artikel werden jedoch auch Versuche beschrieben, bei denen in dieser zweidimensionalen Meßstrecke dreidimensionale Flugzeugmodelle mit Versperrungen kleiner als 2 % vermessen wurden. Zur Berechnung der Wandauslenkung wird ein Verfahren benutzt, welches die Wandinterferenzen auf der Mittelachse des Flugzeugmodells eliminiert. Mit dieser zweidimensionalen Windkanalmeßstrecke für dreidimensionale Flugzeugmodelle ist jedoch keine interferenzfreie Strömung erreichbar. Die Restinterferenzen werden berechnet und die Meßwerte entsprechend korrigiert. Nachteilig ist, daß diese Windkanalmeßstrecke nur für dreidimensionale Flugzeugmodelle mit relativ geringer Versperrung, d. h. also nur für Flugzeugmodelle mit relativ geringer Querschnittsfläche relativ zu der Windkanalquerschnittsfläche, vorgesehen ist. Die Strömungsmessung von Bodenfahrzeugmodellen ist in dieser Meßstrecke nicht vorgesehen.

Der Erfindung liegt die Aufgabe zugrunde, ein Verfahren und eine Vorrichtung der eingangs beschriebenen Art so weiterzubilden, daß interferenzarme Messungen von dreidimensionalen Bodenfahrzeugmodellen mit Versperrungen von bis zu etwa 30 % mit möglichst geringem Zeitaufwand durchführbar sind. Weiterhin soll die Windkanalmeßstrecke möglichst einfach aufgebaut sein.

Das Verfahren kennzeichnet sich erfindungsgemäß dadurch, daß die Wandkontur nur in einer Ebene angepaßt wird, daß die Anpassung der Wandkontur in der Ebene zweidimensional erfolgt, und daß die Anpassung derart durchgeführt wird, daß auf einer Linie in Strömungsrichtung die Windkanalinterferenzen vollständig oder nahezu Null werden. Wichtig ist, daß die wandkontur nur in einer einzigen Ebene angepaßt wird. Dabei erfolgt die Anpassung zweidimensional. Die Anpassung wird dann derart durchgeführt, daß auf einer Linie in Strömungsrichtung die Windkanalinterferenzen eliminiert werden. Die Berechnung zur Anpassung der Wandkontur können auf der Grundlage des von L. Lamarche und E. Wedemeyer vorgeschlagenen Verfahrens "Minimization of wall interferences of three-dimensional models with two-dimensional wall adaptation", Von Karman Institute for Fluid Dynamics, Technical Note 149, 1984, durchgeführt werden. Die vorliegende Erfindung setzt sich über das Vorurteil hinweg, daß bei dreidimensionalen Modellen mit großen Versperrungsverhältnissen die Strahlrandbedingungen möglichst überall in dem Windkanal angepaßt werden sollen. Im Gegensatz dazu wird bei dem erfindungsgemäßen Verfahren auf eine vollständige Anpassung der Strahlrandbedingungen selbst bei dreidimensionalen Bodenfahrzeugmodellen mit einer extrem hohen Versperrung von bis zu etwa 30 % verzichtet. Lediglich in einer einzigen Ebene wird die Wandkontur verändert. Als weitere Vereinfachung ist noch vorgesehen, daß die Wandverformung zweidimensional erfolgt. Insgesamt ist es dadurch möglich, die Anpassung extrem schnell durchzuführen. Dies ist erwünscht, da durch eine schnelle Anpassung der Wandkontur die für die Messung benötigte Zeit erheblich reduziert werden kann und somit auch eine erhebliche Reduktion der oft erheblichen Windkanalkosten möglich ist. Es hat sich überraschenderweise gezeigt, daß die Reduzierung der Wandinterferenzen trotz der nur zweidimensionalen Anpassung in der Ebene selbst für großvolumige, dreidimensionale Bodenfahrzeugmodelle im Bereich der Bodenfahrzeugmodelle ausreichend gut ist, so daß die an dem Bodenfahrzeugmodell durchgeführten Messungen ohne Weiteres auf das Großmodell in ungestörter Strömung übertragen werden können. Dabei ist es sinnvoll, die Wandkontur oberhalb einer Fahrgastzelle des Bodenfahrzeugmodells anzupassen. Als Linie, auf der die Windkanalinterferenzen eliminiert werden, wird vorteilhaft die Mittelachse des Bodenfahrzeugmodells in Strömungsrichtung gewählt. Zur Bestimmung der vorliegenden Wandinterferenzen können an der Wand mehrere statische Drücke in Strömungsrichtung gemessen werden. Im einzelnen wird also erst einmal bei beliebiger Wandkontur eine Vormessung durchgeführt und statische Drücke an der Wand, an der die Wandkontur angepaßt wird, ermittelt. Es reicht dabei aus, daß der Druckverlauf in Strömungsrichtung gemessen wird, also lediglich auf einer Linie in Strömungsrichtung. Weiterhin läßt sich aus den statischen Drücken berechnen, wie die Wandkontur angepaßt werden muß, damit auf der beispielsweise Mittelachse des Bodenfahrzeugmodells keine Windkanalinterferenzen auftreten. Diese ermittelten Werte werden dann dazu herangezogen, die Wand in der einen Ebene zweidimensional entsprechend zu verformen. Sowohl die Berechnung als auch die Anpassung der Wandkontur kann, da die Anpassung nur an einer Wand und zweidimensional erfolgt, sehr schnell vonstatten gehen, so daß der dafür erforderliche Zeitaufwand kaum höher liegt als bei Messungen in herkömmlichen Windkanalmeßstrecken, d. h. also in Windkanalmeßstrecken, bei denen die Wände nicht angepaßt werden können. Als weiterer Vorteil ist zu nennen, daß die Berechnung der Wandkontur in nur einem Schritt erfolgen kann, d. h. also, daß nach der Vormessung gleich die endgültige Anpassung vorgenommen werden kann. Ein iteratives Verfahren ist nicht notwendig. Damit eignet sich das erfindungsgemäße Verfahren insbesondere auch für den Einsatz bei Routinemessungen.

Die Vorrichtung zur Durchführung des Verfahrens nach Anspruch 1 kennzeichnet sich erfindungsgemäß dadurch, daß die Einstellvorrichtungen nur an einer der Wände der Windkanalmeßstrecke vorgesehen sind, und daß die Einstellvorrichtung derart angeordnet und ausgebildet sind, daß die Anpassung der Wandkontur zweidimensional erfolgt. Es ist hier also nicht mehr vorgesehen, wie im Stand der Technik bekannt, möglichst alle, aber zumindest zwei der Wände der Windkanalmeßstrecke derart zu gestalten, daß die Strahlrandbedingungen veränderbar sind, sondern die Wandkontur wird nur durch Verändern einer der Wände entsprechend angepaßt. Die Wände bzw. die eine Wand kann dabei verschiedenartig ausgeführt sein. So ist es beispielsweise auch möglich, eine lokal veränderbare Absaugung in der einen Wand vorzusehen. Auch können Öffnungen lokal unterschiedlich einstellbar sein. Bei solchen Wänden besteht jedoch der Nachteil, daß aufgrund der Wanddurchströmung die Druckmessungen an der Wand beeinflußt werden können. Es wird sich daher im allgemeinen empfehlen, daß die die Einstellvorrichtungen aufweisende Wand der Windkanalmeßstrecke geschlossen und verformbar ausgebildet wird. Die Einstellvorrichtungen greifen dann an der Wand der Windkanalmeßstrecke direkt an, wobei natürlich Gelenke u. dgl. zweckmäßigerweise angeordnet sein können. Als Einstellvorrichtungen sind beispielsweise Spindeln vorstellbar, die von Schrittmotoren angesteuert werden, die wiederum von einem entsprechend programmierten Computer ihre Steuersignale erhalten. Es ist jedoch auch jede andere Ausführungsart der Einstellvorrichtung durchaus denkbar und möglich. Zur Anpassung der Wandkontur wird dann die Wand entsprechend verformt. Diese Verformung soll stets zweidimensional erfolgen, so daß also pro zu verformenden Querschnitt der Windkanalmeßstrecke nur eine einzige Einstellvorrichtung notwendig ist. Die geschlossene Wand bietet auch weiterhin den Vorteil, daß die zur Bestimmungen der Wandkontur notwendigen statischen Drücke durch einfache Druckbohrungen, die auf der verformbaren Wand auf einer Linie in Strömungsrichtung angeordnet sind, in Verbindung mit entsprechenden Druckmeßgeräten meßbar sind. Eine Verfälschung der Druckmessungen findet nicht statt. Damit ist gewährleistet, daß die Druckmessungen eine hohe Genauigkeit aufweisen. Dies ist erforderlich, damit die Wandkontur, sowohl die vorliegenden als auch die, die interferenzfreie Strömung ergibt, mit hoher Genauigkeit bestimmt werden können, um somit letztendlich aussagekräfte Meßergebnisse des Bodenfahrzeugmodells zu erhalten.

Die Windkanalmeßstrecke kann einen beliebigen rechteckigen Querschnitt aufweisen, z. B. mit einem Verhältnis von Breite zu Höhe von B / H = 2,0. Es hat sich herausgestellt, daß dieses Verhältnis, bei dem der Querschnitt der Windkanalmeßstrecke doppelt so breit wie hoch ist, sich auf die Messungen besonders günstig auswirkt. Die Breite wird in etwa so gewählt wie bei herkömmlichen Windkanälen, so daß letztendlich im Gegensatz zu den herkömmlichen Windkanälen die Querschnittsfläche halbiert wird. Dadurch bedingt wird auch etwa nur die Hälfte der Antriebsleistung benötigt, was sich wiederum entsprechend in den Kosten niederschlägt.

Die Erfindung wird anhand von bevorzugten Ausführungsbeispielen weiter beschrieben. Es zeigen:

Figur 1 einen Querschnitt durch eine Windkanalmeßstrecke und

Figur 2 einen Schnitt gemäß der Linie II-II in Figur 1.

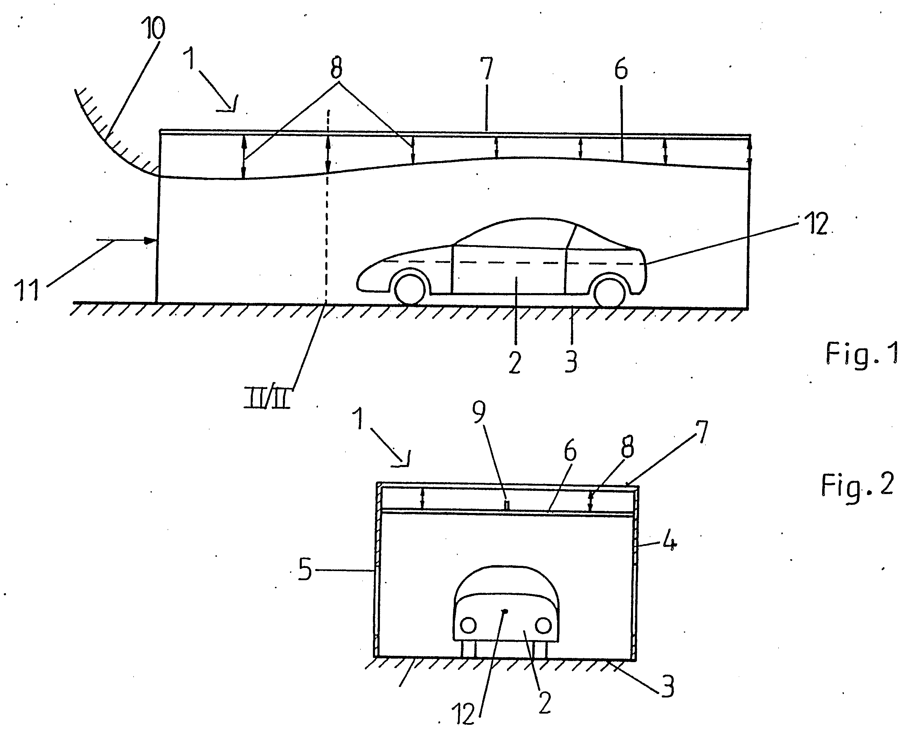

Figur 1 zeigt eine Windkanalmeßstrecke 1, in der ein Bodenfahrzeugmodell 2 auf einem Boden 3 der Windkanalmeßstrecke 1 mit hier nicht weiter dargestellten Mitteln befestigt ist. In dem Bodenfahrzeug 2 sind Meßeinrichtungen o. dgl. vorgesehen, wie sie aus dem Stand der Technik bekannt sind, so daß hier nicht weiter darauf eingegangen werden muß. Die Windkanalmeßstrecke 1 wird im Querschnitt, siehe Figur 2, von dem Boden 3, den Seitenwänden 4 und 5 sowie von der Oberwand 6 und der Tragkonstruktion 7 gebildet. Die Wand 6 ist derart ausgebildet, daß sie mit Hilfe von Einstellvorrichtungen 8 verformbar ist. Die Einstellvorrichtungen 8 sind an der Oberwand 6 und der Tragkonstuktion 7 befestigt, so daß sich die Einstellvorrichtungen 8 daran entsprechend abstützen können. Die Einstellvorrichtungen 8 sind derart ausgebildet, daß sie die Wand 6 lediglich zweidimensional verformen. Die Wand 6 ist also auch nach der Verformung im Querschnitt stets gerade. An der Wand 6 sind Druckbohrungen 9 vorgesehen, die mit hier nicht weiter dargestellten Druckmeßgeräten verbunden sind. Die das Bodenfahrzeugmodell 2 beaufschlagende Strömung wird über eine Düse 10 in die Windkanalmeßstrecke 1 eingebracht, die Strömungsrichtung ist also gemäß Pfeil 11.

Im Folgenden soll nun die Funktionsweise beschrieben werden. In einem ersten Meßschritt wird bei beliebiger Stellung der Einstellvorrichtung 8 und damit der Wand 6 das Bodenfahrzeugmodell 2 umströmt. Die aufgrund der Umströmung des Bodenfahrzeugmodells 2 an der Wand 6 aufgeprägten statischen Drücke werden über die Druckbohrungen 9, die auf einer Linie in Strömungsrichtung, also in Richtung des Pfeils 11 angeordnet sind, mittels Druckmeßgeräten gemessen und zusammen mit der momentanen Stellung der Einstellvorrichtung 8 bzw. der Wand 6 als Eingangsgrößen einem Rechner zugeführt. In dem Rechner wird in einem Schritt diejenige Stellung der Wand 6 bzw. der Einstellvorrichtungen 8 ermittelt, bei der vorzugsweise auf einer Mittelachse 12 des Bodenfahrzeugmodells 2 die Windkanalinterferenzen minimal sind. Diese von dem Rechner ermittelten Größen werden den Einstellvorrichtungen 8 zugeführt und die Wand 6 dann entsprechend eingestellt. Anschließend erfolgt die eigentliche Messung, d. h. also beispielsweise die Ermittlung der Druckverteilung oder der an dem Bodenfahrzeugmodell angreifenden Kräfte. Gleichzeitig werden wiederum die an der Wand 6 anliegenden statischen Drücke bestimmt, so daß ggf. auftretende Restinterferenzen berechnet und die Meßergebnisse des Bodenfahrzeugmodells 2 entsprechend korrigiert werden können. Es hat sich jedoch herausgestellt, daß die Restinterferenzen hinreichend klein sind, so daß eine Korrektur der Meßergebnisse nicht i. A. erforderlich ist.

**Bezugszeichenliste:**

1 = Windkanalmeßstrecke
2 = Bodenfahrzeugmodell
3 = Boden
4 = Seitenwand
5 = Seitenwand
6 = Oberwand
7 = Tragkonstruktion
8 = Einstellvorrichtung
9 = Druckbohrung
10 = Düse
11 = Pfeil
12 = Mittelachse

**Ansprüche**

1. Verfahren zur Strömungsmessung eines großvolumigen dreidimensionalen Bodenfahrzeugmodells in einem Windkanal im Niedergeschwindigkeitsbereich bis etwa 100 m/sec, bei dem zur Vermeidung oder Reduzierung der durch die Meßstreckenwände hervorgerufenen Windkanalinterferenzen die Wandkontur in geeigneter Weise angepaßt wird, dadurch gekennzeichnet, daß die Wandkontur nur in einer Ebene angepaßt wird, daß die Anpassung der Wandkontur in der Ebene zweidimensional erfolgt, und daß die Anpassung derart durchgeführt wird, daß auf einer Linie in Strömungsrichtung die Windkanalinterferenzen vollständig oder nahezu Null werden.

2. Verfahren zur Strömungsmessung nach Anspruch 1, dadurch gekennzeichnet, daß die Wandkontur in der Ebene oberhalb der Fahrgastzelle des Bodenfahrzeugmodells (2) angepaßt wird.

3. Verfahren zur Strömungsmessung nach den Ansprüchen 1 oder 2, dadurch gekennzeichnet, daß als Linie die Mittelachse (12) des Bodenfahrzeugmodells (2) in Strömungsrichtung gewählt wird.

4. Verfahren zur Strömungsmessung nach einem oder mehreren der Ansprüche 1 bis 3, dadurch gekennzeichnet, daß zur Bestimmung der Wandinterferenzen an den Wänden an mehreren Orten statische Drücke gemessen werden.

5. Vorrichtung zur Durchführung des Verfahrens nach Anspruch 1 mit einer das Bodenfahrzeugmodell aufnehmenden, Wände aufweisenden Windkanalmeßstrecke, bei der durch entsprechende Einstellvorrichtungen die Wandkontur veränderbar ist, dadurch gekennzeichnet, daß die Einstellvorrichtungen (8) nur an einer der Wände (4 - 7) der Windkanalmeßstrecke (1) vorgesehen sind, und daß die Einstellvorrichtungen (8) derart angeordnet und ausgebildet sind, daß die Anpassung der Wandkontur zweidimensional erfolgt.

6. Vorrichtung nach Anspruch 5, dadurch gekennzeichnet, daß die die Einstellvorrichtungen aufweisende Wand (6) der Windkanalmeßstrecke (1) verformbar ausgebildet ist.

7. Vorrichtung nach Anspruch 6, dadurch gekennzeichnet, daß Druckbohrungen (9) auf der verformbaren Wand (6) auf einer Linie in Strömungsrichtung angeordnet sind, und daß zur Messung der an den Druckbohrungen anliegenden statischen Drücke Druckmeßgeräte vorgesehen sind.

8. Vorrichtung nach einem oder mehreren der Ansprüche 5 bis 7, dadurch gekennzeichnet, daß die Windkanalmeßstrecke (1) einen rechteckigen Querschnitt mit einem Verhältnis von Breite zu Höhe von z. B. B / H = 2,0 aufweist.

Fig. 1

Fig. 2